# EUROPÄISCHE PATENTSCHRIFT

(11) **EP 2 748 674 B1**
(45) Veröffentlichungstag und Bekanntmachung des Hinweises auf die Patenterteilung: **13.02.2019**
(21) Anmeldenummer: 12770432.8
(22) Anmeldetag: 30.08.2012
(51) Int. Cl.: G03B 17/55, G03B 15/00, H04N 5/225

(54) **GEKÜHLTE LUFTBILDKAMERA**
COOLED AERIAL CAMERA
APPAREIL DE PHOTOGRAPHIE AÉRIENNE REFROIDI

(30) Priorität: 10.10.2011 DE 102011084200
(43) Veröffentlichungstag der Anmeldung: 02.07.2014
(73) Patentinhaber: Leica Geosystems AG, 9435 Heerbrugg (CH)
(72) Erfinder: GLÖCKLER, Gerd, 89197 Weidenstetten (DE)
(74) Vertreter: Lorenz, Markus
(86) Internationale Anmeldenummer: PCT/EP2012/066823
(87) Internationale Veröffentlichungsnummer: WO 2013/053538

(56) Entgegenhaltungen:
- WO-A1-2011/091060
- JP-A- 2004 048 517
- JP-A- 2006 085 002
- US-A1- 2008 089 678

## Beschreibung

Die Erfindung betrifft eine Luftbildkamera mit wenigstens einem Objektiv, einer Anzahl von optoelektronischen und elektronischen Bauteilen und mit einem Gehäuse gemäß dem Oberbegriff von Anspruch 1.

Leiterplatten sind Träger für elektrische bzw. elektronische Bauteile. Leiterplatten werden auch als Leiterkarte, Platine oder gedruckte Schaltung (englisch: Printed Circuit Board/PCB) bezeichnet. In elektrischen bzw. elektronischen Geräten können Leiterplatten mit einer Vielzahl von elektronischen Bauteilen vorhanden sein. Zu diesen Bauteilen zählen beispielsweise Strom-/Spannungswandler, ohmsche Widerstände, Transistoren, Dioden und integrierte Schaltkreise. Die Leiterplatten können dabei auch gestapelt oder nebeneinander angeordnet sein, um den vorhandenen Bauraum besser nutzen zu können.

Die elektrischen bzw. elektronischen Bauteile sind häufig durch eine am Bauteil angebrachte Kapselung von der Umgebung isoliert, wodurch eine Kühlung der Bauteile vergleichsweise einfach gestaltet werden kann, ohne eine Funktionsbeeinträchtigung derselben in Kauf nehmen zu müssen. Die Kühlung der Bauteile erfolgt in diesen Fällen oftmals mit Luft, welche mittels eines Lüfters durch ein die Bauteile umgebendes Gehäuse und zwischen den gekapselten Bauteilen hindurch bewegt wird. Die eingehende Luft weist eine im Vergleich zu den erwärmten Bauteilen niedrigere Temperatur auf, erwärmt sich an diesen Bauteilen und verlässt schließlich das Gehäuse. Eine derartige Kühlung wird beispielsweise bei Computern eingesetzt. Dabei kann es typischerweise zu Verschmutzungen der elektrischen Bauteile in dem Gehäuse kommen.

Leiterplatten werden zunehmend auch mit elektrischen Spezialbauteilen ausgestattet, welche insbesondere auch eine optische Funktion erfüllen können. Beispiele für diese sogenannten optoelektronischen Bauteile sind insbesondere Kamerasensoren, Bewegungsmelder oder dergleichen. Damit Licht oder generell Strahlung des elektromagnetischen Spektrums auf ein optoelektronisches Bauteil treffen kann, weisen derartige Bauteile typischerweise keine oder nur eine das Bauteil partiell umgreifende oder transparente Kapselung auf. Optoelektronische Bauteile sind je nach Umgebungstemperatur zur Aufrechterhaltung ihrer Funktion jedoch ebenfalls zu kühlen. Eine Kühlung mit einem gasförmigen Fluid, wie z. B. gekühlter Luft, welche zwischen den unvollständig gekapselten optoelektronischen Bauteilen hindurch bewegt wird, ist in der Regel nicht möglich, da hierbei eine Verschmutzung etwa durch Staub und/oder Feuchtigkeit und damit eine Funktionsbeeinträchtigung der optoelektronischen Bauteile nicht ausgeschlossen werden kann. Derartige optoelektronischen Bauteile kommen insbesondere in Luftbildkameras zum Einsatz.

Die US 2008/089678 A1 betrifft ein Bildaufnahmegerät, insbesondere eine Videokamera, mit einem Luftkühlkanal.

In der WO 2011/091060 A1 ist ein Gimbal System, einschließlich Geräte und Verfahren, mit erzwungener Strömung von Außenluft durch einen Kanal, um Wärme zu entfernen, angegeben. Die JP 2004 048517 A offenbart eine Digitalkamera, bei welcher die Wärmeabstrahlungseffizienz mit einer einfachen Anordnung verbessert werden soll.

Die JP2006085002A offenbart eine weitere Kamera mit Luftkanal zur Kühlung.

Der Erfindung liegt die Aufgabe zugrunde, eine Luftbildkamera der eingangs erwähnten Art zu schaffen, deren auf unterschiedlichen Ebenen angeordnete elektronische und optoelektronische Bauteile mittels eines gasförmigen Fluids gekühlt werden können und dabei gleichzeitig gegenüber Verschmutzungen aus der Umgebung geschützt sind.

Diese Aufgabe wird mit einer Luftbildkamera mit den in Anspruch 1 aufgeführten Merkmalen gelöst. Die Unteransprüche betreffen vorteilhafte Ausgestaltungen und Weiterbildungen der Erfindung.

Dadurch, dass die Kühleinrichtung des Gehäuses wenigstens zwei in dem Gehäuse integrierte Kühlkanäle zwischen den wenigstens zwei unterschiedlichen Ebenen mit den optoelektronischen und elektronischen Bauteilen aufweist, durch welche zur Kühlung ein gasförmiges Fluid strömt und welche von einer gasförmigen Umgebung der optoelektronischen und elektronischen Bauteile wenigstens annähernd bzw. innerhalb eines Toleranzbereichs vollständig abgetrennt ist, können die optoelektronischen und elektronischen Bauteile der Luftbildkamera komfortabel gekühlt werden, ohne dabei verschmutzt zu werden. Die optoelektronischen Bauteile weisen wenigstens einen optischen Bildsensor auf.

Die wenigstens zwei unterschiedlichen Ebenen können durch wenigstens zwei Leiterplatten gebildet werden, auf welchen die optoelektronischen und elektronischen Bauteile angeordnet sind. Die wenigstens zwei Leiterplatten können elektrisch miteinander verbunden sein.

Um eine Verschmutzung der elektronischen und/oder optoelektronischen Bauteile zu verhindern, kann das Gehäuse an seiner Oberseite und/oder Unterseite weitgehend gegenüber einer gasförmigen Umgebung abgedichtet sein.

Das gasförmige Fluid kann mittels freier oder erzwungener Konvektion durch den wenigstens einen Kühlkanal geleitet werden.

Nachfolgend ist anhand der Zeichnung prinzipmäßig ein Ausführungsbeispiel der Erfindung beschrieben.

Es zeigen:
- Figur 1: ein Gehäuse einer erfindungsgemäßen Luftbildkamera als vereinfachte Explosionsdarstellung; und
- Figur 2: eine vereinfachte perspektivische Ansicht des Gehäuses aus Figur 1 im zusammengebauten Zustand.

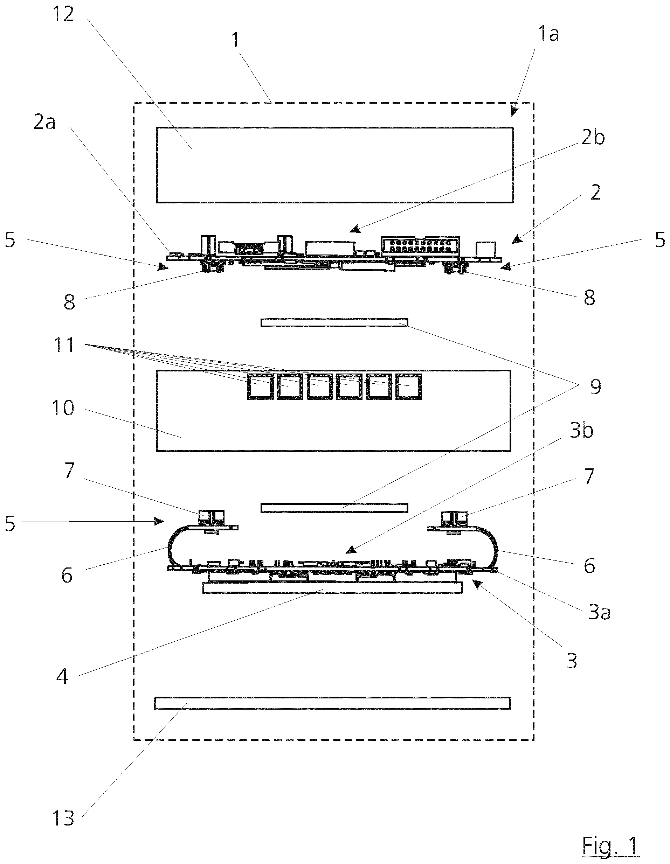

In Figur 1 ist ein Gehäuse 1a bzw. ein Teil eines Gehäuses 1a einer schematisch und gestrichelt angedeuteten Luftbildkamera 1 als Explosionsdarstellung gezeigt. Das Gehäuse 1a enthält in einer ersten Ebene 2 eine erste Leiterplatte 2a mit optoelektronischen und elektronischen Bauteilen 2b sowie in einer zweiten Ebene 3 eine zweite Leiterplatte 3a mit optoelektronischen und elektronischen Bauteilen 3b, auf welcher ein optischer Sensor 4, ein CCD-Sensor oder CMOS-Sensor montiert ist. Die Ebenen 2 und 3 sind voneinander verschieden und insbesondere wenigstens annähernd parallel zueinander übereinander angeordnet.

Der optische Sensor 4 ist ein optoelektronisches Bauteil, welches hierbei eine optische Funktion einer Luftbildkamera erfüllen kann. Die beiden Leiterplatten 2a und 3a können elektrisch miteinander verbunden sein. In dem in Figur 1 gezeigten Ausführungsbeispiel sind die beiden Leiterplatten 2a und 3a mittels stark vereinfacht dargestellten Verbindungsbrücken 5, welche jeweils am Rand der Leiterplatten 2a bzw. 3a angeordnet sind, elektrisch zueinander kontaktiert. Es sind auch Ausführungsformen denkbar, bei welchen sich die Anzahl der Verbindungsbrücken 5 von dem hier gezeigten Beispiel unterscheidet. Eine Verbindungsbrücke 5 kann durch ein Kabel 6, einen Stecker 7 sowie eine Buchse 8 gebildet sein. Das Gehäuse 1a weist eine Kühleinrichtung 10 zur Kühlung der optoelektronischen und elektronischen Bauteile 2b, 3b und 4 auf. Die Kühleinrichtung 10 weist mehrere in dem Gehäuse 1 integrierte Kühlkanäle 11 zwischen den zwei unterschiedlichen Ebenen 2, 3 mit den optoelektronischen und elektronischen Bauteilen 2b, 3b und 4 auf. Durch die integrierten Kühlkanäle 11 strömt zur Kühlung ein gasförmiges Fluid. Die integrierten Kühlkanäle 11 sind von einer gasförmigen Umgebung der optoelektronischen und elektro-nischen Bauteile 2b, 3b und 4 vollständig abgetrennt.

Um die beim Betrieb der optoelektronischen und elektronischen Bauteile 2b, 3b und 4 auf den beiden Leiterplatten 2a und 3a entstehende Wärme über die Kühleinrichtung 10 besser abführen zu können, weist das Gehäuse 1a Wärmeleitkomponenten 9 auf, welche die beiden Leiterplatten 2a und 3a berühren. Die Wärmeleitkomponente 9 kann beispielsweise ein Wärmeleitpad oder eine Wärmeleitpaste sein.

Das Gehäuse 1a ist an seiner Oberseite und/oder Unterseite weitgehend gegenüber einer gasförmigen Umgebung abgedichtet.

Das Gehäuse 1a wird wenigstens aus der Kühleinrichtung 10 mit mehreren integrierten Kühlkanälen 11 sowie einem ersten Gehäuseabschluss 12 und einem optisches Objektiv 13 der Luftbildkamera 1 als zweitem Gehäuseabschluss gebildet. Um sicher zu stellen, dass möglichst keine Umgebungsluft, die gegebenenfalls Schmutzpartikel, wie beispielsweise Staub, enthalten kann, mit den optoelektronischen und elektronischen Bauteilen 2b, 3b und 4 in Kontakt kommt, sind die Kühlkanäle 11 in der Kühleinrichtung 10 derart integriert, dass möglichst weder Umgebungsluft noch das durch die Kühlkanäle 11 strömende gasförmige Fluid mit den optoelektronischen und elektronischen Bauteilen 2b, 3b und 4 in Kontakt kommt. In diesem Fall kann insbesondere eine Verschmutzung des optischen Sensors 4 beispielsweise durch Staub oder Feuchtigkeit weitgehend vermieden werden. Zusätzlich können noch weitere Komponenten zu Abdichtzwecken und um einen besseren Schutz des optischen Sensors 4 insbesondere vor Staub und Feuchtigkeit zu ermöglichen zur Anwendung kommen (nicht dargestellt).

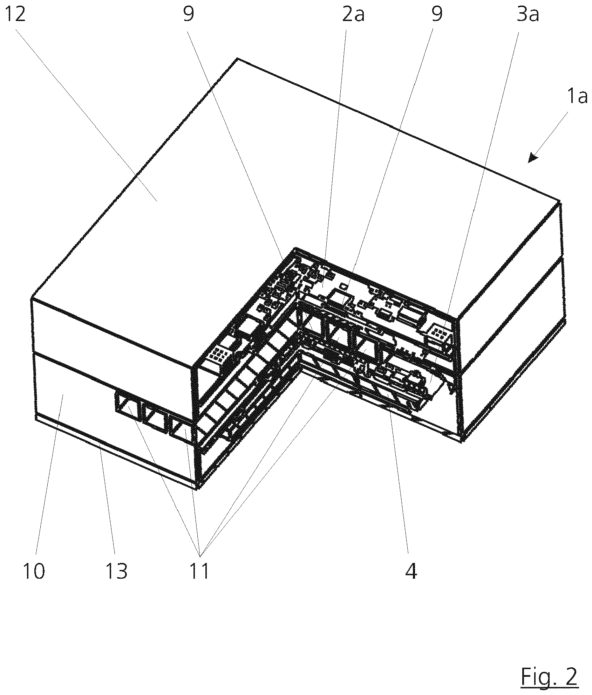

Figur 2 zeigt das Gehäuse 1a in zusammengebautem Zustand in einer perspektivischen Darstellung. Erkennbar sind der Verlauf der Kühlkanäle 11 sowie die thermische Kontaktierung der beiden Leiterplatten 2a und 3a mit den Kühlkanälen 11 über die Wärmeleitkomponenten 9.

Des Weiteren kann ein äußerer Kühlkreislauf vorgesehen sein, welcher z. B. Rohre, einen Wärmetauscher sowie einen Lüfter oder dergleichen aufweist. Der Wärmetauscher kann in Kombination mit dem Lüfter eine Wärmesenke des gesamten Kühlkreislaufs bilden. Das gasförmige Fluid strömt durch freie oder durch erzwungene Konvektion durch den Kühlkreislauf und insbesondere durch die Rohre, den Wärmetauscher und die Kühlkanäle. Um möglichst keine mechanischen Bewegungen, wie z. B. Schwingungen und Stöße, von dem äußeren Kühlkreislauf auf das Gehäuse 1a zu übertragen, können Dämpfungselemente zwischen den Rohren und dem Gehäuse 1a vorhanden sein (nicht dargestellt).

### Bezugszeichenliste

- 1: Luftbildkamera
- 1a: Gehäuse
- 2: Erste Ebene
- 2a: Leiterplatte
- 2b: optoelektronische und elektronische Bauteile
- 3: Zweite Ebene
- 3a: Leiterplatte
- 3b: optoelektronische und elektronische Bauteile
- 4: optischer Sensor
- 5: Verbindungsbrücke
- 6: Kabel
- 7: Stecker
- 8: Buchse
- 9: Wärmeleitkomponente
- 10: Kühleinrichtung
- 11: Kühlkanäle
- 12: Erster Gehäuseabschluss
- 13: Objektiv

## Patentansprüche

1. Luftbildkamera (1) mit wenigstens einem Objektiv (13), einer Anzahl von optoelektronischen und elektro-nischen Bauteilen (2b,3b,4) und mit einem Gehäuse (1a), welches das wenigstens eine Objektiv (13) und die optoelektronischen und elektronischen Bauteile (2b,3b,4) aufweist, wobei die optoelektronischen und elektronischen Bauteile (2b,3b,4) in dem Gehäuse (1a) nebeneinander und/oder übereinander in wenigstens zwei unterschiedlichen wenigstens annähernd parallel zueinander angeordneten, übereinander liegenden Ebenen (2,3) angeordnet sind, wobei das Gehäuse (1a) wenigstens eine Kühleinrichtung (10) zur Kühlung der optoelektronischen und elektronischen Bauteile (2b,3b,4) aufweist,
wobei die Kühleinrichtung (10) wenigstens zwei in dem Gehäuse (1a) integrierte Kühlkanäle (11) zwischen den wenigstens zwei unterschiedlichen Ebenen (2,3) mit den optoelektronischen und elektronischen Bauteilen (2b,3b,4) aufweist, durch welche zur Kühlung ein gasförmiges Fluid strömt und welche von einer gasförmigen Umgebung der optoelektronischen und elektronischen Bauteile (2b,3b,4) vollständig abgetrennt sind, **dadurch gekennzeichnet, dass** die optoelektronischen Bauteile (2b,3b,4) wenigstens einen optischen Bildsensor (4) aufweisen und wobei die optoelektronischen und elektronischen Bauteile (2b,3b,4) mit Wärmeleitkomponenten (9) thermisch an die Kühlkanäle angekoppelt sind.

2. Luftbildkamera nach Anspruch 1,
**dadurch gekennzeichnet, dass** die wenigstens zwei unterschiedlichen Ebenen (2,3) durch wenigstens zwei Leiterplatten (2a,3a) gebildet werden, auf welchen die optoelektronischen und elektronischen Bauteile (2b,3b,4) angeordnet sind.

3. Luftbildkamera nach Anspruch 2,
**dadurch gekennzeichnet, dass** die wenigstens zwei Leiterplatten (2a,3a) elektrisch miteinander verbunden sind.

4. Luftbildkamera nach Anspruch 1, 2 oder 3,
**dadurch gekennzeichnet, dass** das Gehäuse (1a) an seiner Oberseite und/oder Unterseite weitgehend gegenüber einer gasförmigen Umgebung abgedichtet ist.

5. Luftbildkamera nach einem der Ansprüche 1 bis 4,
**dadurch gekennzeichnet, dass** das gasförmige Fluid mittels freier oder erzwungener Konvektion durch die wenigstens zwei Kühlkanäle (11) geleitet wird.

## Claims

1. An aerial camera (1) comprising at least one lens (13), a number of optoelectronic and electronic components (2b, 3b, 4) and comprising a housing (1a), which has the at least one lens (13) and the optoelectronic and electronic components (2b, 3b, 4), wherein the optoelectronic and electronic components (2b, 3b, 4) are arranged in the housing (1a) alongside one another and one above another in at least two different planes (2, 3) arranged at least approximately parallel to one another and above one another, wherein the housing (1a) has at least one cooling device (10) for cooling the optoelectronic and electronic components (2b, 3b, 4), wherein the cooling device (10) has at least two cooling channels (11) integrated in the housing (1a) between the at least two different planes (2, 3) having the optoelectronic and electronic components (2b, 3b, 4), through which at least one cooling channel a gaseous fluid flows for the purpose of cooling and which are completely separated from a gaseous environment of the optoelectronic and electronic components (2b, 3b, 4), **characterized in that** the optoelectronic components (2b, 3b, 4) have at least one optical image sensor (4), and wherein the optoelectronic and electronic components (2b, 3b, 4) are thermally coupled to the cooling channels by means of thermally conductive components (9).

2. The aerial camera as claimed in claim 1,
**characterized in that** the at least two different planes (2, 3) are formed by at least two printed circuit boards (2a, 3a) on which the optoelectronic and electronic components (2b, 3b, 4) are arranged.

3. The aerial camera as claimed in claim 2,
**characterized in that** the at least two printed circuit boards (2a, 3a) are electrically connected to one another.

4. The aerial camera as claimed in claim 1, 2 or 3,
**characterized in that** the housing (1a) is largely sealed in relation to a gaseous environment at its top side and/or underside.

5. The aerial camera as claimed in any one of claims 1 to 4,
**characterized in that** the gaseous fluid is conducted through the at least two cooling channels (11) by means of free or forced convection.

## Revendications

1. Appareil photographique aérien (1) avec au moins un objectif (13), une pluralité de composants optoélectroniques et électroniques (2b, 3b, 4) et avec un boîtier (1a), qui comporte au moins un objectif (13) et les composants optoélectroniques et électroniques (2b, 3b, 4), dans lequel les composants optoélectroniques et électroniques (2b, 3b, 4) sont disposés côte à côte et/ou l'un sur l'autre dans le boîtier (1a), sur au moins deux surfaces (2, 3) différentes, au moins voisines et parallèles, dans lequel le boîtier (1a) comporte au moins une installation de refroidissement (10), pour refroidir les composants optoélectroniques et électroniques (2b, 3b, 4), dans lequel l'installation de refroidissement (10) comporte au moins deux canaux de refroidissement (11), intégrés dans le boîtier (1a) entre les au moins deux surfaces différentes (2, 3), avec les composants optoélectroniques et électroniques (2b, 3b, 4), par lesquels, en vue d'effectuer un refroidissement, un fluide sous forme de gaz est diffusé, par un environnement gazeux, pour séparer totalement les composants optoélectroniques et électroniques (2b, 3b, 4), **caractérisé en ce que** les composants optoélectroniques (2b, 3b, 4) comportent au moins un capteur d'image optique (4) et **en ce que**, les composants optoélectroniques et électroniques (2b, 3b, 4) sont accouplés aux canaux de refroidissement par des composants thermiques (9).

2. Appareil photographique aérien selon la revendication 1,
**caractérisé en ce que**, les au moins deux surfaces différentes (2, 3) sont constituées par au moins deux plaques conductrices (2a, 3a) sur lesquelles sont disposés les composants optoélectroniques et électroniques (2b, 3b, 4).

3. Appareil photographique aérien selon la revendication 2,
**caractérisé en ce que**, les au moins deux plaques conductrices (2a, 3a), sont électriquement connectées entre elles.

4. Appareil photographique aérien selon les revendications 1, 2 ou 3, **caractérisé en ce que**, le boîtier (1a) est largement étanchéifié à son extrémité supérieure et/ou son extrémité inférieure, par rapport à un environnement gazeux.

5. Appareil photographique aérien selon l'une des revendications 1 à 4, **caractérisé en ce que**, le fluide sous forme de gaz est conduit par les deux canaux de refroidissement (11) au moyen de convection libre ou forcée.
